# EUROPÄISCHE PATENTSCHRIFT

(11) **EP 2 698 913 B1**
(45) Veröffentlichungstag und Bekanntmachung des Hinweises auf die Patenterteilung: **20.03.2019**
(21) Anmeldenummer: 12005943.1
(22) Anmeldetag: 17.08.2012
(51) Int. Cl.: H02P 1/04, H02H 9/00, H01H 47/00

(54) **Schaltkreis zur Inbetriebnahme eines Elektromotors in einem handgeführten Arbeitsgerät**
Circuit for starting an electric motor within a hand held device
Circuit pour demarrer un moteur electrique dans un outil à main

(43) Veröffentlichungstag der Anmeldung: 19.02.2014
(73) Patentinhaber: Andreas Stihl AG & Co. KG, 71336 Waiblingen (DE)
(72) Erfinder: Gurr, Kay-Steffen, 74078 Heilbronn (DE); Liebhard, Gernot, 71332 Waiblingen (DE); Wichert, Rene, 73568 Durlangen (DE)
(74) Vertreter: Wasmuth, Rolf

(56) Entgegenhaltungen:
- EP-A2- 2 202 877
- DE-A1- 10 029 853
- JP-A- 57 039 079
- US-A- 4 028 591
- US-A1- 2006 092 674
- US-A1- 2007 164 706

## Beschreibung

Die Erfindung betrifft einen Schaltkreis zur Inbetriebnahme eines Elektromotors in einem handgeführten Arbeitsgerät nach dem Oberbegriff des Anspruchs 1.
Schaltkreise zur Inbetriebnahme von Elektromotoren in handgeführten Arbeitsgeräten sind allgemein bekannt und bestehen im Wesentlichen aus einem Hauptkreis mit dem Elektromotor, einem Akkupack als Energiequelle und einem Betriebsschalter zur Inbetriebnahme des Elektromotors. Um einen kurzzeitig erhöhten Strombedarf des Elektromotors zu decken, ist bekannt, parallel zum Elektromotor bzw. parallel zum Akkupack und dem Betriebsschalter einen Kondensator anzuordnen, der in besonderen Betriebsfällen einen Anteil des Motorstroms bereitstellt.
Wird ein akkubetriebenes Arbeitsgerät nach längerer Betriebspause aus dem Ruhezustand in Betrieb genommen, so wird mit Schließen des Betriebsschalters die Steuerelektronik aufgeweckt und zeitgleich der im Parallelzweig liegende Kondensator aufgeladen. Aufgrund des hohen Ladestroms des Kondensators tritt eine erhebliche elektrische Schaltbelastung des Betriebsschalters auf. Bei einem mechanischen Betriebsschalter verschleißen dabei aufgrund des Kontaktprellens verstärkt die Kontakte.

Relevanter Stand der Technik für die vorliegende Erfindung ist DE 100 29 853 A1, US 2007/164706 A1, JP 57 039079 A, US 4.028.591, US2006/0092674 A1 und EP2202877A2. Diese Druckschriften behandeln die Thematik der Reduktion des Anschaltstromes und des Prellens des mechanischen Hauptschalters.

Der Erfindung liegt die Aufgabe zugrunde, einen bekannten Schaltkreis zur Inbetriebnahme eines Elektromotors derart auszubilden, dass die elektrische Schaltbelastung des Betriebsschalters beim Einschalten des Arbeitsgerätes reduziert ist.

Die Aufgabe wird nach den kennzeichnenden Merkmalen des Anspruchs 1 gelöst.

In den Parallelzweig wird in Reihe mit dem Kondensator ein elektronischer Schalter eingebaut, wobei diese Reihenschaltung aus dem Kondensator und dem elektronischen Schalter ein erstes Ende und ein zweites Ende aufweist. Diese Enden werden mit dem Hauptkreis verbunden, so dass der Lade- und Entladestrom des Kondensators ausschließlich über die Enden der Reihenschaltung fließt. Die elektrische Leistungsverbindung des Kondensators zu dem Hauptkreis ist somit ausschließlich über die beiden Enden der Reihenschaltung gebildet.

Der in der Reihenschaltung des Parallelzweiges liegende Schalter wird gemäß der Erfindung erst nach Ablauf einer Zeitspanne nach dem Schließen des Betriebsschalters im Hauptkreis über eine Ansteuerschaltung in Betrieb genommen, um an den Kondensator eine vom Akkupack bereitgestellte Versorgungsspannung anzulegen. Dabei kann der in Reihe mit dem Kondensator liegende elektronische Schalter der Reihenschaltung als Ein-/Aus-Schalter betrieben werden oder auch über eine Zeitspanne langsam aufgesteuert werden, um eine sprunghafte Strombelastung der Komponenten zu vermeiden.

Durch den erfindungsgemäßen Schaltkreis ist die elektrische Schaltlast des Betriebsschalters im Zeitpunkt des Einschaltens signifikant gesenkt, so dass Schaltzyklen von über 50.000 Schaltvorgängen zerstörungsfrei möglich sind. Dabei ist die Zeitspanne bis zum Durchschalten des elektronischen Schalters der Reihenschaltung vorteilhaft so gewählt, dass das bei einem mechanischen Schalter charakteristische Kontaktprellen abgeklungen ist, die Kontakte also in Ruhe aneinander anliegen.

In bevorzugter Ausfuhrungsform liegt der elektronische Schalter im Massezweig des Kondensators, d. h., der elektronische Schalter liegt in der elektrischen Verbindung zwischen dem Masseanschluss des Kondensators und der Masse des Schaltkreises; es kann zweckmäßig sein, den elektronischen Schalter auf der High-Side des Kondensators vorzusehen, also in der elektrischen Verbindung des Pluspols des Kondensators mit dem Pluspol des Akkupacks.

Der Kondensator ist bevorzugt ein Elektrolytkondensator; die Ausführung als Doppelschichtkondensator, Folienkondensator oder dgl. ist ebenfalls zweckmäßig.

Der Kondensator hat eine Kapazität von mehr als 10 µF, insbesondere hat der Kondensator eine Kapazität zwischen 100 µF und 5.000 µF. Selbst bei sehr großen Kapazitäten von bis zu 5.000 µF ist durch die erfindungsgemäße Ausbildung des Schaltkreises eine unverhältnismäßig hohe Schaltbelastung des Betriebsschalters vermieden.

Der Betriebsschalter ist bevorzugt ein mechanischer Ein-/Aus-Schalter; zweckmäßig kann der mechanische Schalter auch als Proportionalschalter mit einer Kennlinie zwischen der Aus-Stellung und der Volllaststellung ausgebildet sein.

Der elektronische Schalter der Reihenschaltung ist insbesondere ein Leistungstransistor, vorzugsweise ein MOSFET, ein Bipolar-Transistor oder ein entsprechender Leistungsschalter. Um die Strombelastung des Betriebsschalters beim Einschalten und die elektrische Belastung anderer Komponenten weiter zu senken ist vorgesehen, nach Ablauf der Zeitspanne den elektronischen Schalter der Reihenschaltung nicht sprunghaft durchzuschalten, sondern den elektronischen Schalter in einer vorgegebenen Steuerzeit aus der Sperrstellung in die vollständig durchgeschaltete Stellung zu steuern.

Die an den Kondensator angelegte Versorgungsspannung ist zweckmäßig die Akkuspannung; es kann vorteilhaft sein, über einen Spannungsteiler oder dgl. die Versorgungsspannung kleiner als die Akkuspannung auszulegen.

Bleibt der mechanische Betriebsschalter eingeschaltet, so ist vorgesehen, dass der elektronische Schalter der Reihenschaltung den Kondensator nach Erkennung eines elektrischen Betriebszustandes und Ablauf einer Zeitspanne von der Versorgungsspannung trennt. So kann die Ansteuerschaltung z. B. über ihre Spannungsversorgung feststellen, ob die Akkuspannung einen kritischen Grenzwert unterschreitet; tritt dieser Zustand auf, wird er erkannt und nach Ablauf einer Zeitspanne der Kondensator der Reihenschaltung von der Versorgungsspannung getrennt, so dass z. B. über den Kondensator kein Leckstrom fließen kann. Dadurch wird auch der Einsatz kostengünstiger Kondensatoren mit hohen Leckströmen möglich, deren Anwendung ansonsten unzweckmäßig ist.

In bevorzugter Ausführungsform ist der erfindungsgemäße Schaltkreis bei einem mechanisch kommutierten Gleichstrommotor, also bei einem DC-Motor vorgesehen; es kann zweckmäßig sein, den Schaltkreis auch in Verbindung mit einem elektronisch kommutierten Elektromotor vorzusehen.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: eine perspektivische Ansicht auf ein handgeführtes Arbeitsgerät am Beispiel eines Kehrgerätes,
- Fig. 2: eine Draufsicht auf das Kehrgerät nach Fig. 1,
- Fig. 3: ein Prinzipschaltbild für einen elektrischen Motor als Antriebsmotor in einem handgeführten Arbeitsgerät,
- Fig. 4: eine schematische Ansicht einer elektrischen Motorkettensäge,
- Fig. 5: eine perspektivische Ansicht einer elektrischen Heckenschere,
- Fig. 6: eine Seitenansicht eines elektrischen Blasgerätes,
- Fig. 7: ein schematisches Schaltbild zum Betrieb, eines elektronisch kommutierten Motors als Antriebsmotor in einem Arbeitsgerät,
- Fig. 8: ein schematisches Schaubild zum zeitlichen Ablauf der Betriebsspannung U und des Betriebsstroms I_{A} über den Betriebsschalter.

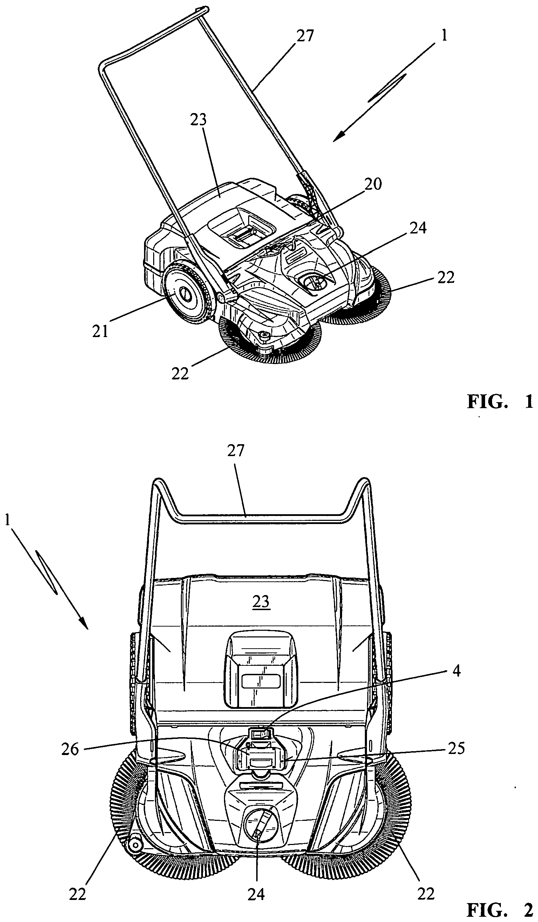

Das in den Figuren 1 und 2 dargestellte Arbeitsgerät 1 ist ein Kehrgerät 20, welches über Räder 21 auf dem Boden aufsteht und im vorderen Bereich um vertikale Achsen drehende Reinigungsbürsten 22 als Arbeitswerkzeuge aufweist. Die rotierenden Reinigungsbürsten 22 befördern erfassten Schmutz in einen hinteren Sammelbehälter 23.

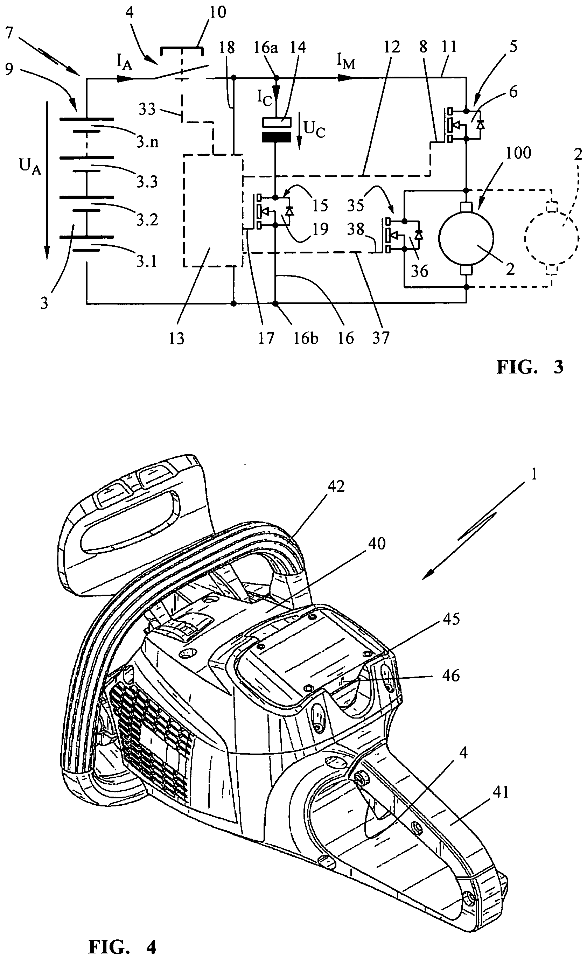

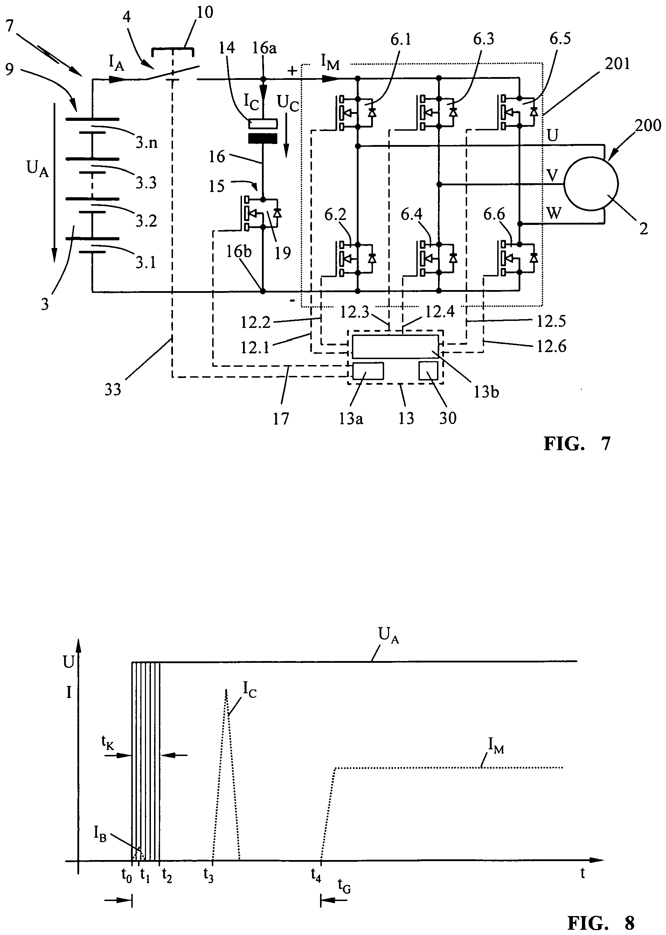

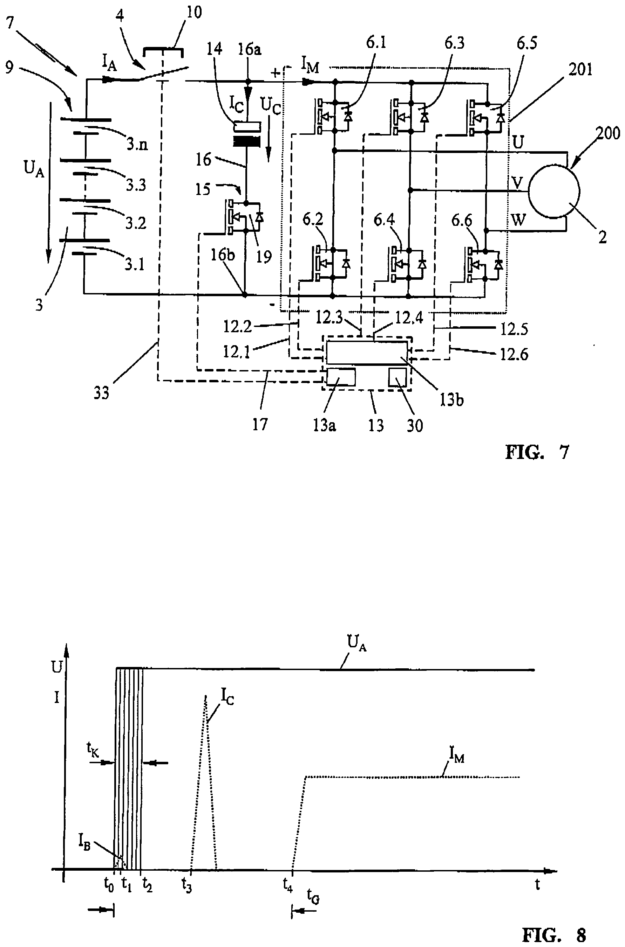

Im vorderen Gehäusebereich ist zwischen den Reinigungsbürsten ein Drehknopf 24 zur Höheneinstellung des Arbeitsgerätes 1 vorgesehen; zwischen dem Drehknopf und dem Sammelbehälter 23 ist im Gehäuse ein Akkuschacht 25 ausgebildet, in den ein Akkublock 26 eingeschoben ist. Zwischen dem Akkuschacht 25 und dem Sammelbehälter 23 ist im Gehäuse ein Betriebsschalter 4 vorgesehen, der als mechanischer Schalter 10 (Figuren 3, 7) ausgebildet ist.

Das Kehrgerät 20 weist ferner einen Bügelgriff 27 zum Führen des Arbeitsgerätes 1 auf, der U-förmig ausgebildet ist und mit seinen Schenkelenden am Gehäuse des Kehrgerätes befestigt ist.

Der als Antriebsmotor eingesetzte Elektromotor des Arbeitsgerätes 1 wird über den mechanischen Schalter 10 in Betrieb genommen. Der in Fig. 3 dargestellte Elektromotor 2 ist ein Gleichstrommotor 100. Der Elektromotor 2 liegt im Hauptkreis 11 eines dargestellten Schaltkreises 7 zur Inbetriebnahme des Elektromotors 2. Der Hauptkreis 11 besteht im Wesentlichen aus dem Elektromotor 2, einem Akkupack 3 als Energiequelle 9 und dem Betriebsschalter 4, der als manuell zu betätigender, mechanischer Schalter 10 ausgeführt ist, insbesondere als mechanischer Ein-/Aus-Schalter.

Sind zum Antrieb der Reinigungsbürsten 22 mehrere Elektromotoren angeordnet, z. B. für jede Reinigungsbürste 22 ein Elektromotor, so werden die Elektromotoren elektrisch zueinander parallel geschaltet, wie in Fig. 3 strichliert dargestellt ist. Der erfindungsgemäße Schaltkreis 7 selbst bleibt unverändert.

Der Akkupack 3 ist aus Einzelzellen 3.1, 3.2, 3.3 bis 3.n gebildet, wobei die Einzelzellen in Reihen und/oder Parallelschaltung zueinander liegen können.

Im gezeigten Ausführungsbeispiel ist im Hauptkreis 11 ferner auf der High-Side des Elektromotors 2, also auf der Seite des Pluspols, ein elektronischer Leistungsschalter 5 vorgesehen, der im gezeigten Ausführungsbeispiel als MOSFET 6 ausgebildet ist. Der Steueranschluss bzw. das Gate 8 ist über eine Steuerleitung 12 mit einer Ansteuerschaltung 13 verbunden. Es kann zweckmäßig sein, den elektronischen Leistungsschalter 5 anstelle auf der High-Side des Elektromotors 2 auf der Low-Side des Elektromotors 2 vorzusehen, also auf der Seite des Masseanschlusses.

Parallel zum Elektromotor 2 liegt ferner ein elektronischer Leistungsschalter 35, der vorteilhaft als MOSFET 36 ausgebildet ist. Der Leistungsschalter 35 liegt parallel zum Elektromotor 2 und dient als Freilaufpfad beim Schalten induktiver Lasten; vorteilhaft kann über den Freilaufpfad bei offenem Betriebsschalter 4 auch die Auslaufzeit des Motors 2 gesenkt werden. Das Gate 38 ist über die Steuerleitung 37 mit der Ansteuerschaltung 13 verbunden.

Der Schaltkreis 7 umfasst ferner eine Reihenschaltung aus einem Kondensator 14 und einem elektronischen Schalter 15, wobei die Reihenschaltung 16 als Parallelzweig zum Leistungsschalter 5 und dem Elektromotor 2 im Hauptkreis 11 liegt. Der elektronische Schalter 15 ist vorteilhaft im Massezweig des Kondensators 14 vorgesehen, liegt also in der elektrischen Verbindung zwischen dem Minuspol des Kondensators 14 und dem Masseanschluss des Schaltkreises 7 bzw. dem Minuspol des Akkupacks 3.

Die Reihenschaltung 16 weist ein erstes Ende 16a und ein zweites Ende 16b auf. Diese Enden 16a und 16b stellen die einzige, unmittelbare elektrische Leistungsverbindung des Kondensators 14 zu dem Hauptkreis 11 dar.

Der Steueranschluss (Gate 17) des vorzugsweise als MOSFET 19 ausgebildeten elektronischen Schalters 15 ist mit der Ansteuerschaltung 13 verbunden; diese mittelbare Verbindung mit dem Hauptkreis 11 ist keine Leistungsverbindung, da über den Steueranschluss 17 kein signifikanter Lade- oder Entladestrom des Kondensators 14 fließt. Über die Enden 16a und 16b der Reihenschaltung fließen die elektrischen Lade- und Entladeströme des Kondensators 14, so dass die Enden16a, 16b die einzige elektrische Leistungsverbindung des Kondensators 14 mit dem Hauptkreis 11 darstellen. Die Ansteuerschaltung 13 steuert zweckmäßig auch weitere elektronische Leistungsschalter 5, 35 des Schaltkreises 7.

Die Ansteuerschaltung 13 erfasst das Einschalten des mechanischen Betriebsschalters 4 z. B. über die eigene Spannungsversorgung 18 oder eine Signalleitung 33, über die der Ansteuerschaltung 13 die Schaltstellung des Betriebsschalters 4 mitgeteilt ist.

Schaltet der Benutzer manuell über den mechanischen Betriebsschalter 4 zum Zeitpunkt t₀ (Fig. 8) den Hauptkreis 11 des Schaltkreises 7 ein, so wird zunächst die Steuerelektronik aufgeweckt, also die Ansteuerschaltung 13 in Betrieb genommen. Dabei tritt ein kleiner Betriebsstrom I_{B} über eine Zeit t₁ auf, wie in Fig. 8 dargestellt ist. Dieser kleine Betriebsstrom I_{B} wird von dem Betriebsschalter 4 geschaltet, insbesondere liegt dieser nur dieser kleine Betriebsstrom I_{B} währende dem Zeitraum t_{K} = t₂ - t₀ des Kontaktprellens des mechanischen Schalters 10 an. Kontaktprellen tritt bei jedem mechanischen Schalter 10 auf und bezeichnet den Zeitraum des Umschaltens vom Aus-Zustand bis zu dem Ein-Zustand, in dem die Kontakte des Betriebsschalters 4 bzw. des mechanischen Schalters 10 in Ruhe aneinander anliegen.

Nach Ablauf einer vorgegebenen Zeitspanne t₃ - t₀, die in einem Bereich von 1 bis 300 Millisekunden, vorzugsweise im Bereich von 1 bis 50 ms liegen kann, steuert die Ansteuerschaltung 13 zum Zeitpunkt t₃ (Fig. 8) den elektronischen Schalter 15 in der Reihenschaltung 16 an, im Ausführungsbeispiel das Gate 17 des MOSFET's 19 an, so dass der Schalter 15 ganz oder teilweise durchschaltet und somit in der Reihenschaltung 16 als Parallelzweig zum Akkupack 3 und dem Betriebsschalter 4 ein Strom I_{C} fließt; der Kondensator 14 lädt sich auf die Spannung Uc auf. An dem Kondensator 14 liegt eine Versorgungsspannung, die vorzugsweise die Akkuspannung U_{A} ist.

Da der MOSFET 19 um eine Zeitspanne von etwa 1 ms bis zu 50 ms, vorteilhaft etwa 10 ms, zeitverzögert nach dem Betätigen des Betriebsschalters 4 schließt, ist vorzugsweise das Kontaktprellen im Wesentlichen oder auch vollständig abgeklungen und der Ladestrom I_{C} des Kondensators 14 kann den Betriebsschalter 4 im Zeitpunkt des Einschaltens und während des Kontaktprellens nicht belasten. Wird der Elektromotor 2 - vorzugsweise über einen Leistungsschalter 5 - z. B. im Zeitpunkt t₄ in Betrieb genommen, ist der Ladestrom I_{C} des Kondensators 14 bereits abgesunken. Vorteilhaft führt der Ladestrom I_{C} durch den Kondensator 14 nicht neben dem Motorstrom I_{M} zu einer erhöhten elektrischen Belastung des Akkupacks 3. Der dem Akkupack 3 entnommene Strom I_{A} wird also in einer Zeit nach dem Zeitpunkt t₄ nach dem Einschalten des Betriebsschalters 4 im Wesentlichen der Motorstrom I_{M} sein. Der von der Ansteuerschaltung 13 durchgeschaltete elektronische Schalter 5, also das MOSFET 6 ist über das Gate 8 angesteuert und schließt den Hauptkreis 11; durch den Gleichstrommotor 100 fließt der Motorstrom I_{M}; der Elektromotor 2 dreht und treibt das Arbeitswerkzeug des Arbeitsgerätes 1 an.

Die Ansteuerschaltung 13 gemäß Fig. 3 mit einem Gleichstrommotor 100 als Antriebsmotor für ein Arbeitswerkzeug ist in vielen akkubetriebenen Arbeitsgeräten 1 einsetzbar, so wie sie beispielhaft in den Figuren 1, 2 und 4 bis 6 dargestellt sind.

Fig. 4 zeigt als Arbeitsgerät 1 eine Motorsäge 40, in deren Gehäuse ein Akkuschacht 45 ausgebildet ist. Im Akkuschacht 45 ist ein Akkublock 46 eingeschoben, der aus in einem Akkugehäuse angeordneten Einzelzellen 3.1 bis 3.n als Akkupack 3 gebildet ist.

Die Motorsäge 40 weist einen in Längsrichtung des Arbeitsgerätes 1 ausgerichteten hinteren Handgriff 41 sowie einen im vorderen Bereich des Gehäuses angeordneten, quer zur Längsrichtung liegenden Bügelgriff 42 als vorderen Handgriff auf. Der Akkuschacht 45 liegt zwischen dem Bügelgriff 42 und dem hinteren Handgriff 41, wobei im hinteren Handgriff 41 der Betriebsschalter 4 für den als Antriebsmotor im Gehäuse vorgesehenen Elektromotor 2 vorgesehen ist. Der Betriebsschalter 4 ist nicht als Ein-/Aus-Schalter vorgesehen, sondern als stellungsproportionaler Gashebel, der abhängig vom ausgeführten Stellweg ein Signal an die Ansteuerschaltung 13 abgibt. In Abhängigkeit des Stellwegs wird die Drehzahl des Elektromotors 2 (Fig. 3) gesteuert.

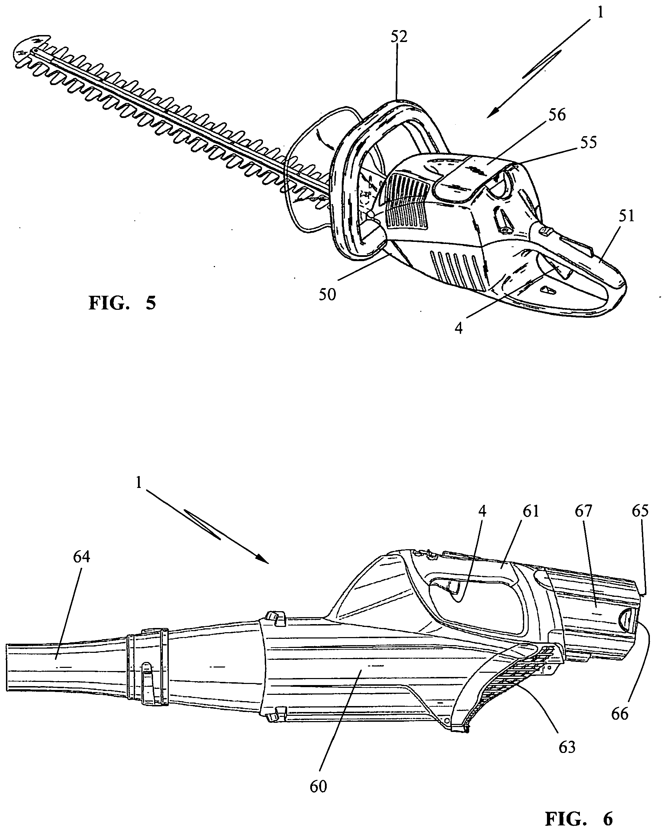

Das in Fig. 5 dargestellte Arbeitsgerät 1 ist eine Heckenschere 50 mit einem hinteren, in Längsrichtung des Arbeitsgerätes 1 ausgerichteten hinteren Handriff 51, wobei im vorderen Bereich des Gehäuses ein quer zur Längsrichtung liegender Bügelgriff 52 als vorderer Handgriff angeordnet ist. Der vordere Bügelgriff 52 ist als zweischaliger Griff ausgebildet, wobei die beiden Teilschalen relativ zueinander bewegbar sind und z. B. einen Schalter einer Zweihandsicherung betätigen.

Zwischen dem vorderen Bügelgriff 52 und dem hinteren Handgriff 51 ist im Gehäuse der Heckenschere 50 ein Akkuschacht 55 ausgebildet, in den ein Akkublock 56 als Energiequelle eingeschoben ist.

Im hinteren Handgriff 51 der Heckenschere ist der Betriebsschalter 4 angeordnet, der als Ein-/Aus-Schalter ausgeführt ist.

Ein weiteres Arbeitsgerät 1 ist in Fig. 6 dargestellt und als Blasgerät 60 ausgebildet. Das Gehäuse des Blasgerätes 60 hat einen in Längsrichtung des Arbeitsgerätes 1 ausgerichteten Handgriff 61, der im gezeigten Ausführungsbeispiel als oberer Handgriff ausgeführt ist. Im Gehäuse ist eine Ansaugöffnung 63 vorgesehen, welche unterhalb des Handgriffs 61 liegt; der von einem Gebläse erzeugte Blasluftstrom wird durch ein Blasrohr 64 nach vorne abgegeben.

Am hinteren Ende des Handgriffs 61 ist ein Gehäuseansatz 67 vorgesehen, der sich in Längsrichtung des Arbeitgerätes 1 erstreckt und einen Akkuschacht 65 bildet. In den Akkuschacht ist ein Akkublock 66 als Energiequelle eingeschoben.

Die dargestellten, akkubetriebenen Arbeitsgeräte 1 zeigen Beispiele von elektrischen Arbeitsgeräten, in denen der erfindungsgemäße Schaltkreis vorteilhaft angewendet werden kann. Als Arbeitsgeräte sind auch akkubetriebene Trennschleifer, akkubetriebene rückengetragene Blasgeräte, Freischneider, Erntegeräte oder dgl. zweckmäßig.

Im Ausführungsbeispiel nach Fig. 7 ist schematisch der erfindungsgemäße Schaltkreis nach Fig. 3 für eine Ausführung des Elektromotors 2 als elektronisch kommutierter Motor 200 (EC-Motor) wiedergegeben. Gleiche Bauelemente, Stromkreise und Signalleitungen sind mit gleichen Bezugszeichen wie in Fig. 3 bezeichnet.

Der elektronisch kommutierte Elektromotor 200 wird über eine Ansteuerbrücke 201 angesteuert, wobei die Ansteuerbrücke eine Akkuspannung U_{A} in die drei Phasen U, V und W für den EC-Motor 200 umsetzt. Hierzu sind in der Ansteuerschaltung drei Parallelzweige vorgesehen, in denen jeweils zwei MOSFET's 6.1, 6.2; 6.3, 6.4; 6.5, 6.6 angeordnet sind. Die Phasenanschlüsse U, V und W werden zwischen je zwei MOSFET's eines Parallelzweiges abgegriffen; die Phase U wird zwischen den MOSFET's 6.1 und 6.2, die Phase V zwischen den MOSFET's 6.3 und 6.4 und die Phase W zwischen den MOSFET's 6.5 und 6.6 abgegriffen.

Die Steueranschlüsse (Gate) der MOSFET's sind über Steuerleitungen 12.1 bis 12.6 von der Ansteuerschaltung 13 angesteuert, die über die Steuerleitung 17 auch das MOSFET 19 der Reihenschaltung 16 aus Kondensator 14 und MOSFET 19 ansteuert. Über die Signalleitung 33 wird der Ansteuerschaltung 13 darüber hinaus der Betriebszustand des Betriebsschalters 4 mitgeteilt.

Es kann zweckmäßig sein, zur Ansteuerung des elektronischen Schalters 15 in der Reihenschaltung 16 eine von der Ansteuerschaltung 13 getrennte Steuerschaltung 13a vorzusehen und die Brückensteuerung 13b getrennt davon auszuführen. Vorteilhaft ist vorgesehen, die Steuerschaltung 13a und die Brückensteuerung 13b durch einen Mikroprozessor 30 zu steuern, wobei die Schaltungen und der Mikroprozessor 30 vorteilhaft in der Ansteuerschaltung 13 gemeinsam zusammengefasst sind.

Der Kondensator 14 der Reihenschaltung 16 kann ein einzelner Kondensator beliebiger Bauart sein (Fig. 3, 7), z. B. ein Doppelschichtkondensator, ein Folienkondensator, ein Elektrolytkondensator oder dgl.. Bevorzugt ist die Erfindung mit einem Elektrolytkondensator ausgeführt. Als Kondensator können auch Reihenschaltungen oder Parallelschaltungen von Bauelementen gleicher oder unterschiedlicher Kapazitäten vorgesehen sein.

Der verwendete Kondensator 14 hat eine Kapazität von mehr als 10 µF, insbesondere liegt die Kapazität des Kondensators 14 im Bereich von 100 µF bis 5000 µF.

In der dargestellten Ausführungsform, ist der elektronische Schalter 15 der Reihenschaltung 16 ein Leistungstransistor. Dieser wird bevorzugt nicht sprunghaft von der Sperrstellung in die vollständig leitende Stellung geschaltet, sondern innerhalb einer vorgegebenen Steuerzeit aufgesteuert, so dass der Ladestrom kontrolliert ansteigt. Dadurch kann die Spitzenstrombelastung der Komponenten des Schaltkreises und auch die elektrische Belastung des Akkupacks 3 gesenkt werden.

In der Praxis kann es vorkommen, - z. B. bei dem Kehrgerät nach den Figuren 1 und 2 - dass der mechanische Betriebsschalter 4 in seiner Ein-Stellung verbleibt, da der Benutzer das Kehrgerät so lange benutzt bis aufgrund der abgesunkenen Akkuspannung die Ansteuerschaltung 13 den Elektromotor ausschaltet. Tritt dieser Zustand auf, wird dieser Betriebszustand - z. B. durch Unterschreiten einer Akkugrenzspannung - erkannt und nach dieser Zustandserkennung und Ablauf einer vorgegebenen Zeitspanne der Kondensator der Reihenschaltung von der Versorgungsspannung getrennt, damit der bauartbedingte Leckstrom durch den Kondensator nicht zu einer Tiefentladung und eventueller Schädigung des Akkupacks führt.

Der Akkupack 3 aus Einzelzellen 3.1, 3.2, 3.3 bis 3.n ist bevorzugt ein Lithium-Ionen-Akkupack; auch andere Ausführungen, die chemisch auf Lithium basieren, wie z. B. Lithium-Polymer, Lithium-Eisen oder dgl. sind zweckmäßig. Im Akkupack 3 können Einzelzellen 3.1 bis 3.n beliebiger Anzahl, Bauart und beliebiger chemischer Struktur miteinander zur Bildung einer Energiequelle 9 verbunden werden.

In dem Schaubild nach Fig. 8 ist als Ausführungsbeispiel ein Zeitablauf zum Einschalten eines Arbeitsgerätes wiedergegeben. Im Zeitpunkt t₀ wird der Betriebsschalter 4, vorzugsweise eine mechanischer Ein-/Aus-Schalter 10 eingeschaltet, wodurch die Akkuspannung U_{A} an den Schaltkreis 11 und die Ansteuerschaltung 13 angelegt ist. Es tritt ein erster Betriebsstrom I_{B} auf, der von der Ansteuerschaltung 13 aufgenommen ist. Der Betriebsstrom I_{B} wird als Schaltstrom vom Betriebsschalter 4 geschaltet und liegt auch während der Zeitspanne tₖ des Kontaktprellens an. Nach Abklingen des Kontaktprellens des Betriebsschalters 4 wird im Zeitpunkt t₃, der etwa 1 ms bis 50 ms nach dem Zeitpunkt t₀ des Einschaltens liegt, die Reihenschaltung 16 durchgeschaltet, so dass sich der Kondensator 14 auflädt und ein Ladestrom I_{C} fließt. Nach dem Aufladen des Kondensators 14 - der Ladestrom I_{C} ist vorzugsweise abgeklungen - wird im Zeitpunkt t₄ der Elektromotor 2 eingeschaltet, so dass der Motorstrom I_{M} fließt. Der Zeitpunkt t₄ liegt in einem Bereich von etwa 1 ms bis 300 ms nach dem Zeitpunkt t₀, dem Zeitpunkt des Einschaltens des manuellen Betriebsschalters 4. Zwischen dem Zeitpunkt t₀ des Einschaltens des manuellen Betriebsschalters 4 und dem Einschalten des Motorstroms I_{M} zum Zeitpunkt t₄ liegt die Zeitspanne t_{G} von 1 ms bis 300 ms.

## Patentansprüche

1. Schaltkreis zur Inbetriebnahme eines Elektromotors (2) in einem handgeführten Arbeitsgerät (1), insbesondere für einen Gleichstrommotor (100), bestehend aus
• einem Hauptkreis (11) mit dem Elektromotor (2), einem Akkupack (3) als Energiequelle und einem mechanischen Betriebsschalter (4) zur Inbetriebnahme des Elektromotors (2),
• sowie einem Parallelzweig zum Akkupack (3) und dem Betriebsschalter (4), wobei in dem Parallelzweig ein Kondensator (14) angeordnet ist,
**dadurch gekennzeichnet,**
• **dass** der Parallelzweig einen in Reihe zu dem Kondensator (14) liegenden elektronischen Schalter (15) aufweist,
• **dass** die Reihenschaltung (16) aus dem Kondensator (14) und dem • elektronischen Schalter (15) ein erstes Ende (16a) und ein zweites Ende (16b) aufweist,
• **dass** die Enden (16a, 16b) der Reihenschaltung (16) die einzige elektrische Leistungsverbindung des Kondensators (14) zu dem Hauptkreis (11) bilden, über die die elektrischen Lade- und Entladeströme des Kondensators (14) fließen,
• und **dass** der elektronische Schalter (15) der Reihenschaltung (16) nach Ablauf einer Zeitspanne nach dem Schließen des Betriebsschalters (4) an den Kondensator (14) eine vom Akkupack (3) bereitgestellte Versorgungsspannung anlegt, und
• **dass** der Elektromotor (2) über einen Leistungsschalter (5) in Betrieb genommen wird, wenn der Ladestrom (I_{C}) des Kondensators (14) bereits abgesunken ist.

2. Schaltkreis nach Anspruch 1,
**dadurch gekennzeichnet, dass** der elektronische Schalter (15) im Massezweig des Kondensators (14) liegt.

3. Schaltkreis nach Anspruch 1 oder 2,
**dadurch gekennzeichnet, dass** der Kondensator (14) ein Elektrolytkondensator ist.

4. Schaltkreis nach einem der Ansprüche 1 bis 3,
**dadurch gekennzeichnet, dass** der Kondensator (14) eine Kapazität von mehr als 10 µF hat.

5. Schaltkreis nach Anspruch 4,
**dadurch gekennzeichnet, dass** die Kapazität des Kondensators (14) im Bereich von 100 µF bis 5.000 µF liegt.

6. Schaltkreis nach einem der Ansprüche 1 bis 5,
**dadurch gekennzeichnet, dass** der Betriebsschalter (4) ein mechanischer Ein-/AusSchalter (10) ist.

7. Schaltkreis nach einem der Ansprüche 1 bis 6,
**dadurch gekennzeichnet, dass** der elektronische Schalter (15) der Reihenschaltung (16) ein Leistungstransistor ist, insbesondere ein MOSFET (19) ist.

8. Schaltkreis nach einem der Ansprüche 1 bis 7,
**dadurch gekennzeichnet, dass** der elektronische Schalter (15) in einer vorgegebenen Steuerzeit aus seiner Sperrstellung in eine leitende Stellung gesteuert wird.

9. Schaltkreis nach einem der Ansprüche 1 bis 8,
**dadurch gekennzeichnet, dass** die Versorgungsspannung die Akkuspannung (U_{A}) ist.

10. Schaltkreis nach einem der Ansprüche 1 bis 9,
**dadurch gekennzeichnet, dass** der elektronische Schalter (15) der Reihenschaltung (16) den Kondensator (14) nach Erkennung eines elektrischen Betriebszustandes und Ablauf einer Zeitspanne von der Versorgungsspannung trennt.

11. Schaltkreis nach einem der Ansprüche 1 bis 10,
**dadurch gekennzeichnet, dass** der Elektromotor (2) ein elektronisch kommutierter Elektromotor (200) ist.

12. Schaltkreis nach einem der Ansprüche 1 bis 10,
**dadurch gekennzeichnet, dass** mehrere Elektromotoren vorgesehen sind und die Elektromotoren (2) mechanisch kommutierter Elektromotoren sind, wobei die Elektromotoren (2) zueinander elektrisch parallel geschaltet im Hauptkreis (11) liegen.

## Claims

1. Switching circuit for the operation of an electric motor (2) in a hand-guided working device (1), in particular for a direct-current motor (100), consisting of
• a main circuit (11) with the electric motor (2), a battery pack (3) as the energy source and a mechanical operating switch (4) for starting the electric motor (2),
• and a parallel branch to the battery pack (3) and the operating switch (4), with a capacitor (14) arranged in the parallel branch,
**characterised in that**
• the parallel branch comprises an electronic switch (15) connected in series with the capacitor (14),
• the series circuit (16) with the capacitor (14) and the electronic switch (15) has a first end (16a) and a second end (16b),
• and the ends (16a, 16b) of the series circuit (16) form the only electrical power connections of the capacitor (14) to the main circuit (11), by way of which the electric charging and discharging currents of the capacitor (14) flow,
• and after the lapse of a time interval following the closing of the operating switch (4) the electronic switch (15) of the series circuit (16) applies to the capacitor (14) a supply voltage from the battery pack (3), and
• the electric motor (2) is brought into operation by a power switch (5) when the charging current (I_{C}) of the capacitor (14) has already fallen.

2. Switching circuit according to claim 1,
**characterised in that** the electronic switch (15) is in the ground branch of the capacitor (14).

3. Switching circuit according to claims 1 or 2,
**characterised in that** the capacitor (14) is an electrolytic capacitor.

4. Switching circuit according to any of claims 1 to 3,
**characterised in that** the capacitor (14) has a capacity in excess of 10 µF.

5. Switching circuit according to claim 4,
**characterised in that** the capacity of the capacitor (14) is in the range 100 µF to 5,000 µF.

6. Switching circuit according to any of claims 1 to 5,
**characterised in that** the operating switch (4) is a mechanical on/off switch (10).

7. Switching circuit according to any of claims 1 to 6,
**characterised in that** the electronic switch (15) of the series circuit (16) is a power transistor, in particular a MOSFET (19).

8. Switching circuit according to any of claims 1 to 7,
**characterised in that** within a predetermined control time the electronic switch (15) is changed from its blocking position to a conducting position.

9. Switching circuit according to any of claims 1 to 8,
**characterised in that** the supply voltage is the voltage (U_{A}) of the battery pack.

10. Switching circuit according to any of claims 1 to 9,
**characterised in that** the electronic switch (15) of the series circuit (16) separates the capacitor (14) from the supply voltage after recognising an electric operating condition and after the lapse of a time interval.

11. Switching circuit according to any of claims 1 to 10,
**characterised in that** the electric motor (2) is an electronically commutated electric motor (200).

12. Switching circuit according to any of claims 1 to 10,
**characterised in that** a plurality of electric motors are provided, and the electric motors (2) are mechanically commutated electric motors, wherein the electric motors (2) are connected electrically parallel to one another in the main circuit (11).

## Revendications

1. Circuit pour le démarrage d'un moteur électrique (2) dans un outil à main (1), en particulier pour un moteur à courant continu (100), composé
• d'un circuit principal (11) avec le moteur électrique (2), une batterie (3) comme source d'énergie, et un commutateur de service mécanique (4) pour le démarrage du moteur électrique (2),
• et d'une branche parallèle à la batterie (3) et au commutateur de service (4), un condensateur (14) étant disposé dans la branche parallèle,
**caractérisé**
• **en ce que** la branche parallèle comporte un commutateur électronique (15) monté en série avec le condensateur (14),
• **en ce que** le montage en série (16) composé du condensateur (14) et du commutateur électronique (15) comporte une première extrémité (16a) et une seconde extrémité (16b),
• **en ce que** les extrémités (16a, 16b) du montage en série (16) forment l'unique liaison de puissance électrique du condensateur (14) avec le circuit principal (11), par laquelle passent les courants électriques de charge et de décharge du condensateur (14),
• et **en ce que** le commutateur électronique (15) du montage en série (16), après écoulement d'un laps de temps qui suit la fermeture du commutateur de service (4), applique au condensateur (14) une tension d'alimentation fournie par la batterie (3), et
• **en ce que** le moteur électrique (2) est démarré par l'intermédiaire d'un commutateur de puissance (5) si le courant de charge (I_{C}) du condensateur (14) a déjà baissé.

2. Circuit selon la revendication 1,
**caractérisé en ce que** le commutateur (15) se trouve dans la branche de masse du condensateur (14).

3. Circuit selon la revendication 1 ou 2,
**caractérisé en ce que** le condensateur (14) est un condensateur électrolytique.

4. Circuit selon l'une des revendications 1 à 3,
**caractérisé en ce que** le condensateur (14) a une capacité de plus de 10 µF.

5. Circuit selon la revendication 4,
**caractérisé en ce que** la capacité du condensateur (14) est située dans la plage de 100 µF à 5000 µF.

6. Circuit selon l'une des revendications 1 à 5,
**caractérisé en ce que** le commutateur de service (4) est un commutateur mécanique marche/arrêt (10).

7. Circuit selon l'une des revendications 1 à 6,
**caractérisé en ce que** le commutateur électronique (15) du montage en série (16) est un transistor de puissance, en particulier un MOSFET (19).

8. Circuit selon l'une des revendications 1 à 7,
**caractérisé en ce que** le commutateur électronique (15) est commandé pour passer, dans une durée de commande prédéfinie, de sa position de blocage à une position conductrice.

9. Circuit selon l'une des revendications 1 à 8,
**caractérisé en ce que** la tension d'alimentation est la tension de batterie (U_{A}).

10. Circuit selon l'une des revendications 1 à 9,
**caractérisé en ce que** le commutateur électronique (15) du montage en série (16), après la détection d'un état de service électrique et l'écoulement d'un laps de temps, sépare le condensateur (14) de la tension d'alimentation.

11. Circuit selon l'une des revendications 1 à 10,
**caractérisé en ce que** le moteur électrique (2) est un moteur électrique (200) à commutation électronique.

12. Circuit selon l'une des revendications 1 à 10,
**caractérisé en ce qu'**il est prévu plusieurs moteurs électriques, et les moteurs électriques (2) sont des moteurs électriques à commutation mécanique, les moteurs électriques (2) étant montés en parallèle électriquement les uns par rapport aux autres dans le circuit principal (11).
